# EUROPEAN PATENT APPLICATION

(11) **EP 2 200 264 A1**
(43) Date of publication of application: **23.06.2010**
(21) Application number: 08305967.5
(22) Date of filing: 18.12.2008
(51) Int. Cl.: H04M 3/42, H04M 3/493

(54) **Method for notifying availability of called party to calling party**

(71) Applicant: Alcatel Lucent, 75008 Paris (FR)
(72) Inventor: Anand, Surbhi, 110026, DELHI (IN); Bansal, Vinay, 110034, NEW DELHI (IN); Singla, Nigam, 122001, GURGAON, HARYANA (IN)
(74) Representative: Nicolle, Olivier

(57) **Abstract**

A method of notifying availability of a called party to a calling party is disclosed. The calling party or called party invokes a notification service by sending a request to the network to notify when the called party switches on or comes under the network coverage. The notification service makes use of existing short message service and its related MAP messages and signaling to find when the called party becomes available. The method includes the notification service creating and sending the message to called party, called party network checking availability of the called party, MSC of called party sending a failure report to the service if said called party is not available, Home Location Register (HLR) of called party sending an alert indicating the availability of called party and notification service sending a notification message to calling party informing availability of called party, on receipt of the alert.

## Description

### BACKGROUND

### Technical Field

The embodiments herein generally relate to communication networks, and, more particularly, to call services in a mobile network.

### Description of the Related Art

Wireless communications have become a vital part of everyday life, allowing people to communicate regardless of the location and also provide the customers an array of useful services to augment the advantages of mobile communications including call waiting, voice mail, short message services and the like.

Calling parties often encounter situations in which the called party is not available because the called party's phone may be switched-off or the called party may be out of network range. In such situations, the calling party may forego leaving a message on voicemail, or hang up and retry the call attempt later. The calling party is unaware when the called party may be available and need to keep calling until the called party switches on his phone or becomes reachable. These unsuccessful intermediate attempts involve cost in terms of calling party's time, plan minutes, and battery power. Also, uncompleted call-back attempts make use of system resources, for which the service provider may not produce any profit. This problem has led to the development of certain services in which a call server or external network server provides an indication to the mobile calling party when the called party is available. However, the approaches require additional network equipments and additional messaging in the network.

The present solutions use a polling mechanism to obtain status of the called party, which causes overhead in the network because of extra messages and signaling. Further, the polling mechanism is performed only for a short duration and after which the called party is assumed to be permanently not available.

### SUMMARY

In view of the foregoing, an embodiment herein provides a method of notifying availability of a called party to a calling party. The method comprises of the calling party sending a notification request to a calling party network, a notification service sending a message to called party network, wherein the notification service is hosted in the calling party network, the called party network checking availability of the called party, Message Service Center (MSC) of the called party sending a failure report to the call service if the called party is not available, called party network sending an alert indicating the availability of the called party on cellular communication device of the called party registering with the called party network, and the notification service sending a notification message to the calling party informing availability of the called party, on receipt of the alert. The notification request can be made using one of an Unstructured Supplementary Service Data (USSD) string; an Interactive Voice Response (IVR) menu, and a Short Message Service (SMS). The calling party network checks availability of the called party using one of a Message Switching Center (MSC), a Visitor Location Register (VLR), and a Home Location Register (HLR). The Home Location Register (HLR) of called party network sends alert to calling party network indicating availability of called party. The called party registers for the notification service by sending a subscription request. The failure report comprises of a data-unit including Mobile-Station-Not-Reachable-Flag (MNRF) and Mobile-Station-Not-Reachable-Reason (MNRR) fields.

Embodiments herein further disclose a telecommunication network comprising at least one means adapted to send an acknowledgment for notification request to a calling party, send a message including routing information to the called party network, from network of the called party, on identifying unavailability of the called party; and receive an alert indicating availability of the called party from the called party network and notify availability of the called party to the calling party, on the called party becoming available. The network further comprising at least one means to add notification service to called party network, wherein the notification service is hosted in the calling party network. The calling party network stores record of the calling party on receiving a request for notification of availability of the called party and removes record of the calling party and the called party from notification list on sending the called party availability notification to the calling party. The network further comprises a means for setting Mobile-Station-Not-Reachable-Flag (MNRF) and Mobile-Station-Not-Reachable-Reason (MNRR) on sending the failure report to the calling party indicating non availability of the called party. The network comprises a means for resetting MNRF and MNRR on sending the called party availability notification to the calling party.

Embodiments herein further disclose a network comprising at least one means adapted to enable a called party to subscribe for a notification service, inform unavailability of the called party to the calling party if the called party is not reachable, send an alert indicating availability of the called party to the called party network, when the called party becomes available. The network comprises a means adapted to remove record of the calling party from a notification list on sending the called party availability notification to the calling party.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:

FIG. 1 is a block diagram depicting the network elements involved for a notification service installed at calling party's telecommunication network, according to an embodiment herein;

FIG. 2 illustrates a schematic diagram depicting the call flow for notifying the availability of a called party to a calling party using a USSD string to request notification service in a telecommunication network, according to an embodiment herein;

FIG. 3 illustrates a flowchart depicting a method of notifying the availability of a called party to a calling party using a USSD string to request notification service in a telecommunication network, according to an embodiment herein;

FIG. 4 illustrates a schematic diagram depicting the call flow for notifying the availability of a called party to a calling party using an SMS to request notification service in a telecommunication network, according to an embodiment herein;

FIG. 5 illustrates a flowchart depicting a method of notifying the availability of a called party to a calling party using an SMS message to request notification service in a telecommunication network, according to an embodiment herein;

FIG. 6 is a block diagram depicting the network elements involved for a notification service installed at called party's telecommunication network, according to an embodiment herein;

FIG. 7 illustrates a schematic diagram depicting the call flow for subscription of notification service by a called party using an SMS in a telecommunication network according to an embodiment herein;

FIG. 8 illustrates a schematic diagram depicting the call flow for subscription of notification service by a called party using an SMS in a telecommunication network according to an embodiment herein;

FIG. 9 illustrates a schematic diagram depicting the call flow for notifying the availability of an initially non-available called party to a calling party by a notification in a telecommunication network according to an embodiment herein; and

FIG. 10 illustrates a flowchart depicting a method of notifying the availability of an initially non-available called subscriber to a calling party in a telecommunication network according to an embodiment herein.

### DETAILED DESCRIPTION OF PREFERRED EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

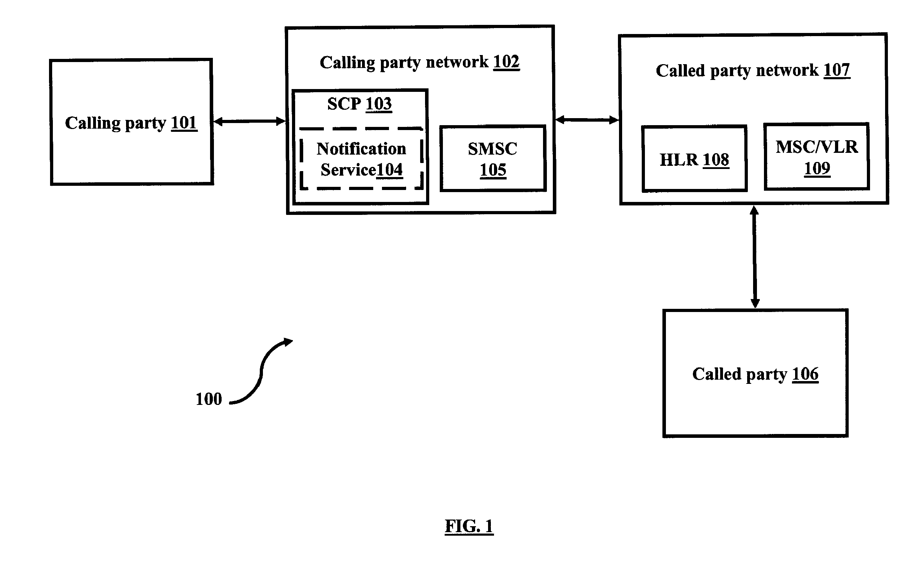

The embodiments herein achieve a method for notifying the availability of a called party to a calling party when the called party has switched on the cellular communication device or reached under network coverage in GSM networks. The embodiment also provides method for sending notification to calling party when the initially unavailable called party becomes available. Referring now to the drawings, and more particularly to FIGS. 1 through 10, where similar reference characters denote corresponding features consistently throughout the figures, there are shown preferred embodiments.

The embodiment herein discloses a method to allow notifying a calling party of the availability of a called party without specific change in network elements. The calling party or called party can request the network to notify the availability of the called party to calling parties by dialing an Unstructured Supplementary Service Data (USSD) string or by sending a Short Message Service (SMS) to an operator defined number or via Interactive Voice Response (IVR) or by sending email to the address of notification service or any suitable means possible to send a request of notification. To notify, the notification service emulates as Short Message Switching Center (SMSC) and sends an SMS to the called party. The called party network checks the status of the called party device. If the called party device is switched-off or out of network coverage, then called party MSC sends a failure report to the notification service and called party Home Location Register (HLR) stores the address (GT or MSISDN) of notification service in Message Waiting Data (MWD) list for the called party and called party network sets the flags Mobile Not Reachable Flag (MNRF) and Mobile Not Reachable Reason (MNRR). Further, when the called party switches on the cellular communication device or reaches an area with network coverage and gets registered to the network by answering a paging response, HLR of called party sends an alert indicating the availability of called party to the notification service. On reception of the alert message, the service notifies the availability of the called party to calling party(s) through an SMS, USSD String or by any other means to send the notification.

FIG. 1 is a block diagram depicting the network elements involved for a notification service installed at calling party's telecommunication network, according to an embodiment herein. The calling party 101 can request the calling party network 102 to notify when the called party 106 is available, for instance, when the called party's 106 cellular communication device is switched on or has come under network coverage. The called party 106 can be a GSM cellular subscriber of any operator and also there is no restriction on the location and service provider of called party 106. The calling party 101 can request the notification to the calling party network 102 by dialing a Unstructured Supplementary Service Data (USSD) string, for instance *<special code digits>*<MSISDN of called party># or by sending a Short Message Service (SMS) in the format specified to a user defined number or via Interactive Voice Response (IVR) or by sending email to the address of notification service or by any other means possible to send a request of notification. The notification service 104 is hosted in SCP 104 of the calling party network 102. Service Control Point (SCP) 103 is a standard component of Intelligent Networks (IN) telephone system which is used to control a service. SCP 103 offers a more flexible and efficient platform for implementing and modifying call processing information.. The SCP 103 co-operates with Service Switching Points (SSPs) during call processing, to add functionality to customers' services and can work with several SSPs in different phases of call processing, from validation, through call set-up to call termination. The SCP 103 queries the Service Data Point (SDP) which holds the database containing all customer-related information needed by service applications and identifies the geographical number to which the call is to be routed. The notification service 104 emulates as a Short Message Service Center (SMSC) and creates a Short Message Service (SMS) and tries to send to the called party network 107. The called party network 107 comprises of a Home Location Register (HLR) 108 and Mobile Switching Center and Visitor Location Register (MSC/VLR) 109. The HLR 108 is a central database that contains details of each cellular device subscriber who is authorized to use the GSM core network. The HLR 108 incorporates the Message Waiting Data (MWD) list and the data units Mobile-Station-Not-Reachable-Flag (MNRF) and Mobile-Station-Not-Reachable-Reason (MNRR). The Mobile-Station-Not-Reachable-Flag (MNRF) within the HLR and the VLR is a Boolean parameter with the value TRUE when the list MWD contains one or more list elements because an attempt to deliver a short message to an MS has failed with a cause of Absent Subscriber, and with the value FALSE otherwise. The Mobile-Station-Not-Reachable-Reason (MNRR) within the HLR stores the reason for the MS being absent when an attempt to deliver a short message to an MS fails at the MSC with the cause Absent Subscriber. The HLR updates the MNRR with the reason for absence and the MNRF is set. The HLR clears the MNRR when the MNRF is cleared. The MNRR shall contain one of the following reasons as 'No Paging Response via the MSC' and 'IMSI Detached'. When a mobile terminated short message delivery fails due to the MS being temporarily absent, the SC address is inserted into the MWD list (if it is not already present), the MNRF is set (if it is not already set) and the MNRR is updated. When either the HLR or VLR detects that the MS (with a non-empty MWD and the MNRF set in the VLR) has recovered operation (e.g. has responded to a paging request), the HLR directly or on request of the VLR will invoke operations to alert the SCs within the MWD. Once the Alert-SC operations have been invoked, the MNRF and MNRR via the MSC are cleared. After each SC is alerted by the HLR, the address for that SC is deleted from the MWD. HLR 108 directly receives and processes Mobile Application Part (MAP) transactions and messages from elements in the GSM network, for example, the Location Update messages received as mobile phones roam around. MSC 109 is a primary service delivery node for GSM, responsible for handling voice calls and SMS as well as other services (such as conference calls, FAX and circuit switched data). The MSC/VLR 109 sets up and releases the end-to-end connection, handles mobility and hand-over requirements during the call and takes care of charging and real time pre-paid account monitoring. The MSC/VLR 109 checks the status of called party 106 by checking the database if International Mobile Subscriber Identity (IMSI) of called party 106 is attached and/or performs a paging for the cellular communication device of called party 106. If the called party 106 is not available, then MSC/VLR 109 sends a failure response to the notification service 104 in network 102. When the called party 106 cellular communication device is switched on and/or answers a paging response and gets registered to the network 107, the MSC/VLR 109 sends an alert message, instanced as Alert-SC) to calling party network 102 notification services 104 indicating the availability of the called party 106. On receiving the called party 106 alert message, the service 104 sends a notification in the form of an SMS or by any other means possible to send the notification to the calling party 101 as initially requested.

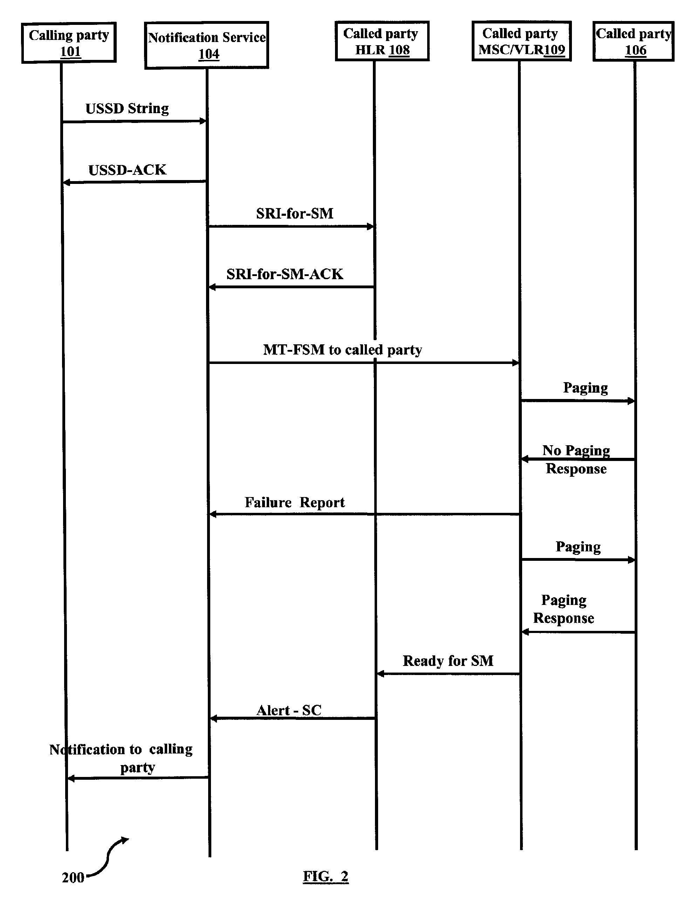

FIG. 2 illustrates a schematic diagram depicting the call flow for notifying the availability of a called party to a calling party using a USSD string to request notification service in a telecommunication network, according to an embodiment herein. The calling party 101 sends an Unstructured Supplementary Service Data (USSD) string to a notification service 104 hosted in the calling party network 102 to request for a notification indicating that the called party 106 cellular communication device is switched on or is under network coverage. The service 104 sends a message USSD-ACK as an acknowledgement to the notification request to calling party 101. The service 104 records the information of calling party 101 and called party 106. The service 104 emulates as SMSC and tries to send high priority SMS to called party 106. For it, the notification service 104 first sends a SRI-for-SM message to called party's 106 Home Location Register (HLR) 108. HLR 108 responds with routing information in SRI-for-SM ACK. The notification service 104 then creates a message, mobile terminated forward short messages (MT-FSM), where the content of SMS can be for instance, <msisdn of calling party>was trying to call at <current time>" and sends the message to Mobile Switching Center (MSC/VLR) 109 of called party 106. Mobile Switching Center or Visitor Location Register (MSC/VLR) 109 then checks the status of the called party 106 by performing a paging for cellular communication device station report. If the called party 106 device is not reachable, the MSC/VLR 109 receives no paging response and MSC/VLR 109 sends a failure report to service 104. If the IMSI of called party 106 is detached, then also MSC/VLR 109 sends a failure report. The destination HLR 108 registers notification service 104 of calling party network 102 in Messages-Waiting-Data (MWD) list and the called party network 107 also sets data-units Mobile-Station-Not-Reachable-Flag (MNRF) and Mobile-Station-Not-Reachable-Reason (MNRR). The failure report thus comprises of an absent subscriber indication and the reason for it. When the called party 106 device gets switched on or becomes network reachable and answers a paging response and gets registered to the network 107, a Ready-for-ShortMessage message is sent from MSC/VLR 109 to HLR 108 of called party 106. HLR 108 and VLR 109 resets the data unit MNRF and MNRR and sends a Alert-SC to notification service 104 that was added in message waiting data (MWD) list of called party at HLR 108. The notification service 104 address is then removed from MWD list at HLR 108 of called party 106. On receiving the Alert-SC message, the notification service 104 sends a notification SMS to the calling party 101 as initially requested. The notification informs the calling party 101 that the called party's 106 cellular communication device is switched on and is in network reachable range. The notification service 104 then removes the record of calling party 101 and called party 106 from notification list in the database.

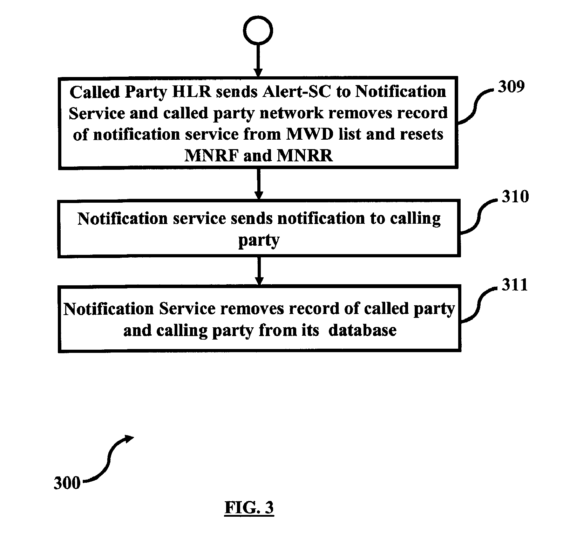

FIG. 3 illustrates a flowchart depicting a method of notifying the availability of a called party to a calling party using a USSD string to request notification service in a telecommunication network, according to an embodiment herein. The calling party 101 sends (301) a USSD string as a request for notification of the availability of the called party 106 to a notification service 104 in the calling party network 102. The notification service 104 in calling party network 102 records calling party 101 information in the network database and sends (302) an acknowledgement message USSD-ACK to calling party 101. The notification service 104 is hosted in the calling party network 102. The notification service 104 emulates as SMSC and creates and sends (303) a high priority SMS detailing the information of the call from the calling party 101 to called party 106. The MSC/VLR 109 of called party network 107 checks (304) the status of called party 106. Further, the called party network 107 performs a check (305) to find if the called party 106 cellular communication device is switched on or under network coverage. If the called party 106 is not attached with the network 107 (for instance, called party is switched off) or if the called party 106 does not answer to the paging (for instance, called party is not under network coverage), the called party HLR 108 records (306) the address (GT or MSISDN) of notification service 104 in the MWD list of called party incorporated at HLR 108 of called party network 107. The called party network 107 sets the data units MNRF and MNRR of called party 106 incorporated in HLR 108 and MSC/VLR 109. Then MSC/VLR 109 of the called party network sends a failure report or failure response comprising of absent subscriber indication and its reason to notification service 104, indicating the cellular communication device of called user is switched off or not under network coverage. The called party network 107 keeps on checking (307) the availability of called party 106. If the cellular communication device of called user switches on or gets registered with the network 106 or if the paging is answered by the called party 104 device, then MSC/VLR 109 sends (308) a ReadyForSM MAP message to called party's 104 Home Location Register (HLR) 108. HLR 108 sends (309) an Alert-SC MAP message to notification service 104 since it was added in MWD list of called party 106 at the called party HLR 108. Further, the notification service 104 sends (310) an SMS on reception of Alert-SC as a notification informing the availability of the called party 106. Called party network 107 removes the address (GT or MSISDN) of notification service 104 from the MWD list of called party 106 at called party HLR 108 and resets the data units MNRF and MNRR of called party 106 at called party HLR 108 and called party MSC/VLR 109. Thereafter, the notification service 104 removes (311) the record of calling party 101 and called party 106 from notification list in the network 102. The various actions in method 300 may be performed in the order presented, in a different order or simultaneously. Further, in some embodiments, some actions listed in FIG. 3 may be omitted.

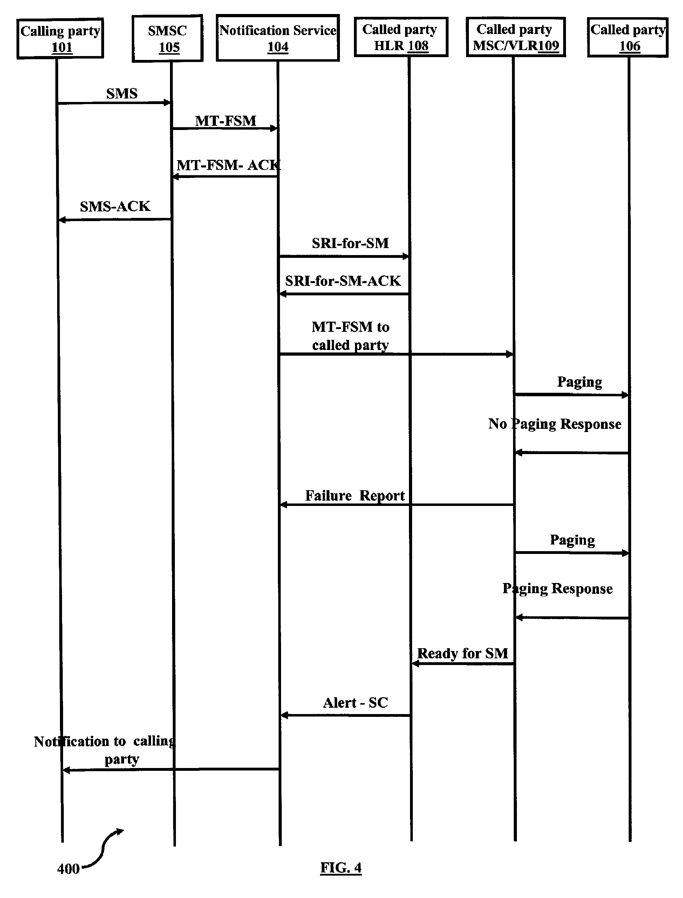

FIG. 4 illustrates a schematic diagram depicting the call flow for notifying the availability of a called party to a calling party using an SMS to request notification service in a telecommunication network, according to an embodiment herein. The calling party 101 sends a Short Message Service (SMS) to a Short Message Service Center (SMSC) 105 to request notification when the initially unavailable called party 106 becomes available. The SMSC 105 then sends the request as a Mobile Transmitted Forward Short Message (MT-FSM) to the notification service 104. The notification service 104 accepts the message and a sends a MT-FSM ACK response message to SMSC 105. The SMSC 105 then sends a SMS-ACK to calling party 101 as an acknowledgement to the notification request. The service 104 records the information of calling party 101 and called party 106. The service 104 emulates as SMSC and tries to send high priority SMS to called party 106. For it, the notification service 104 first sends a SRI-for-SM message to called party's 106 Home Location Register (HLR) 108. HLR 108 responds with routing information in SRI-for-SM ACK. The notification service 104 then creates a message, mobile terminated forward short messages (MT-FSM), where the content of SMS can be for instance, <msisdn of calling party>was trying to call at <current time>" and sends the message to Mobile Switching Center (MSC/VLR) 109 of called party 106. Mobile Switching Center or Visitor Location Register (MSC/VLR) 109 then checks the status of the called party 106 by performing a paging for cellular communication device station report. If the called party 106 device is not reachable, the MSC/VLR 109 receives no paging response and MSC/VLR 109 sends a failure report to service 104. If the IMSI of called party 106 is detached, then also MSC/VLR 109 sends a failure report. The destination HLR 108 registers notification service 104 of calling party network 102 in Messages-Waiting-Data (MWD) list and the called party network 107 also sets data-units Mobile-Station-Not-Reachable-Flag (MNRF) and Mobile-Station-Not-Reachable-Reason (MNRR). The failure report thus comprises of an absent subscriber indication and the reason for it. When the called party 106 device gets switched on or becomes network reachable and answers a paging response and gets registered to the network 107, a Ready-for-ShortMessage message is sent from MSC/VLR 109 to HLR 108 of called party 106. HLR 108 and VLR 109 resets the data unit MNRF and MNRR and sends a Alert-SC to notification service 104 that was added in message waiting data (MWD) list of called party at HLR 108. The notification service 104 address (GT or MSISDN) is then removed from MWD list at HLR 108 of called party 106. On receiving the Alert-SC message, the notification service 104 sends a notification SMS to the calling party 101 as initially requested. The notification informs the calling party 101 that the called party's 106 cellular communication device is switched on and is in network reachable range. The notification service 104 then remove the record of calling party 101 and called party 106 from notification list in calling party network 102.

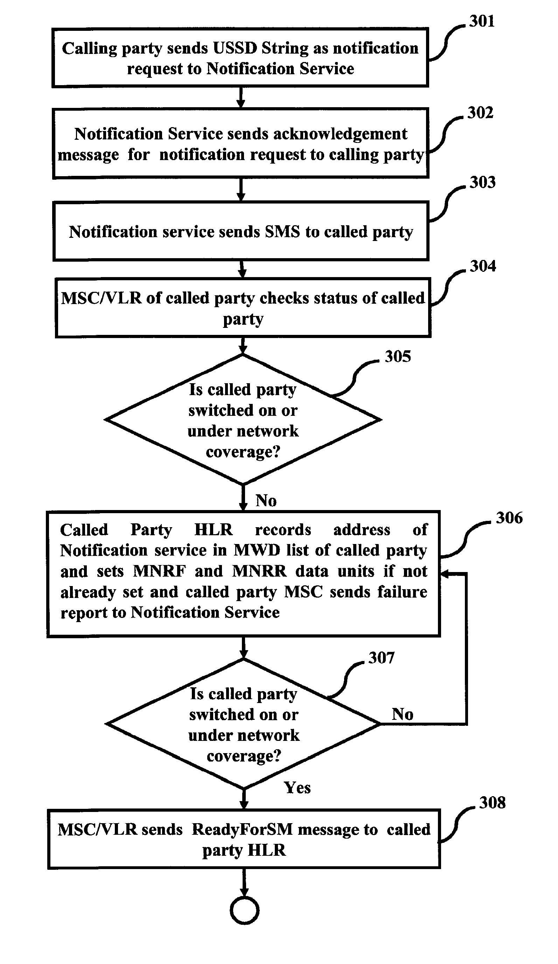

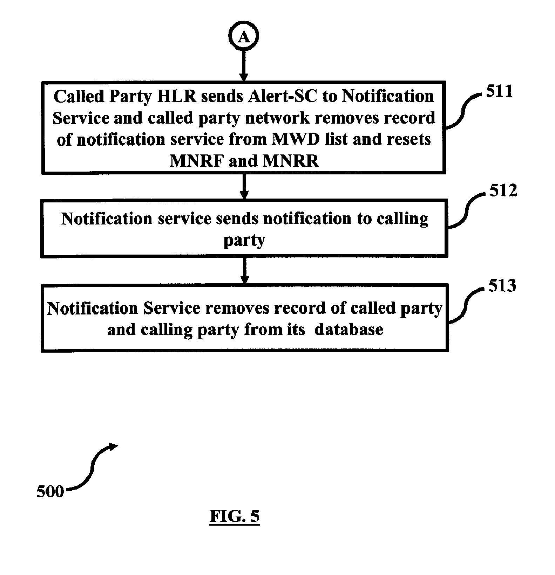

FIG. 5 illustrates a flowchart depicting a method of notifying the availability of a called party to a calling party using an SMS message to request notification service in a telecommunication network, according to an embodiment herein. The calling party 101 sends (501) a Short Message Service (SMS) to a Short Message Service Center (SMSC) 105 to request to notify the availability of a called party 106. The SMSC 105 then forwards (502) the request as a Mobile Transmitted Forward Short Message (MT-FSM) to the notification service 104. The notification service 104 accepts the message and acknowledges (503) the message by sending a MT-FSM ACK response to SMSC 105. The SMSC 105 then sends (504) a SMS-ACK to calling party 101 as an acknowledgement to the notification request. The notification service 104 emulates as SMSC and creates and sends (505) a high priority SMS detailing the information of the call by the calling party 101 to called party 106. The destination MSC/VLR 109 of called party network 107 checks (506) the status of called party 106. Further, the called party network 107 performs a check (507) to find if the called party 106 cellular communication device is switched on or under network coverage. If the called party 106 is not attached with the network 107 (for instance, called party is switched off) or if the called party 106 does not answer to the paging (for instance, called party is not under network coverage), the called party HLR 108 records (508) the address (GT or MSISDN) of notification service 104 in the MWD list of called party incorporated at HLR 108 of called party network 107. The called party network 107 sets the data units MNRF and MNRR of called party 106 incorporated in HLR 108 and VLR 109 (508). Then MSC/VLR 109 of the called party network sends a failure report or failure response comprising of absent subscriber indication and its reason to notification service 104, indicating the cellular communication device of called user is switched off or not under network coverage. The called party network 107 keeps on checking (509) the availability of called party. If the cellular communication device of called user switches on or gets registered with the network 106 or if the paging is answered by the called party 104 device, then MSC/VLR 109 sends (510) a ReadyForSM MAP message to called party's 104 Home Location Register (HLR) 108. HLR 108 sends (511) an Alert-SC MAP message to notification service 104 since it was added in MWD list of called party 106 at the called party HLR 108. Further, the notification service 104 sends (512) SMS to calling party on reception of Alert-SC as a notification informing the availability of the called party 106. Called party network 107 removes the address (GT or MSISDN) of notification service 104 from the MWD list of called party 106 at called party HLR 108 and resets the data units MNRF and MNRR of called party 106 at called party HLR 108 and called party VLR 109. Thereafter, the service 104 removes (513) the record of calling party 101 and called party 106 from list in the notification service 104. The various actions in method 500 may be performed in the order presented, in a different order or simultaneously. Further, in some embodiments, some actions listed in FIG. 5 may be omitted.

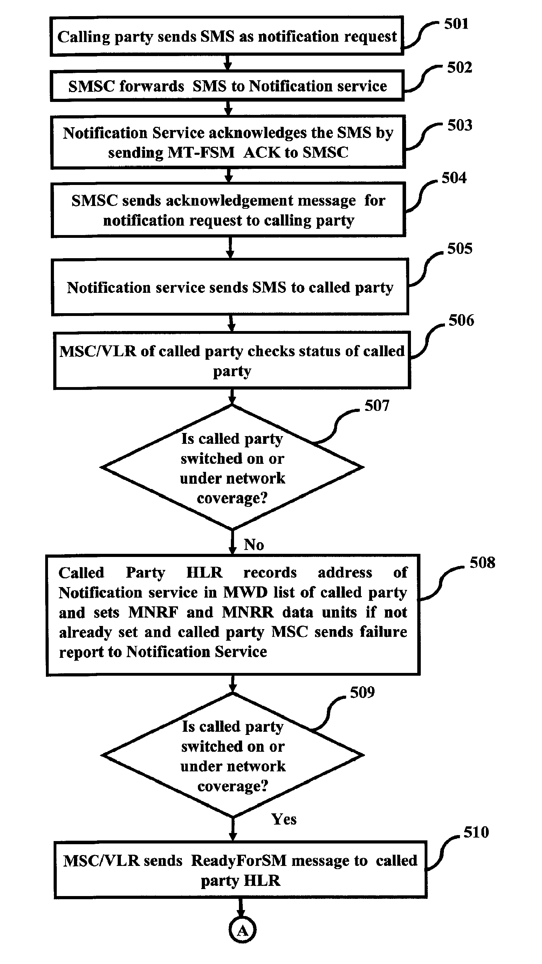

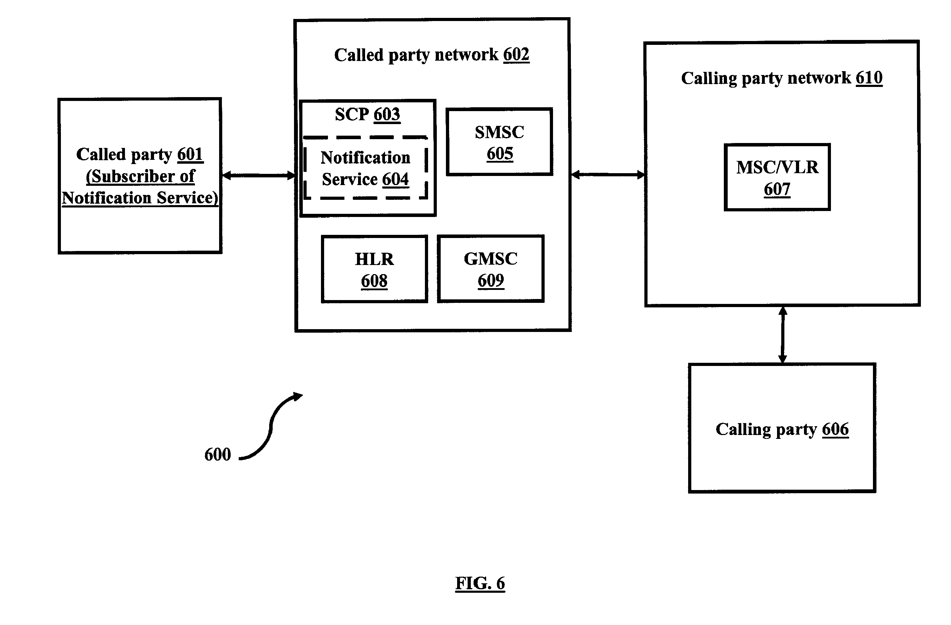

FIG. 6 is a block diagram depicting the network elements involved for a notification service installed at called party's telecommunication network, according to an embodiment herein. The called party 601 can subscribe to notification service 604 to request the sending of notifications to calling parties 606 when the called party 601 becomes available, for instance, when the called party's 106 cellular communication device is switched on or has come under network coverage. The calling party 606 can be a GSM cellular subscriber of any operator and also there is no restriction on the location and service provider of calling party 606. The called party 601 can subscribe to the notification service 604 by dialing a Unstructured Supplementary Service Data (USSD) string, for instance *<special code digits># or by sending a Short Message Service (SMS) in the format specified to a user defined number or via Interactive Voice Response (IVR) or by sending email to the address of notification service or by any other means possible to send a request of notification. The notification service 604 is hosted in SCP 603 of the called party network 602. Service Control Point (SCP) 603 is a standard component of Intelligent Networks (IN) telephone system which is used to control a service. SCP 603 offers a more flexible and efficient platform for implementing and modifying call processing information. The SMSC 605 is hosted in called party network 602. The SCP 603 co-operates with Service Switching Points (SSPs) during call processing, to add functionality to customers' services and can work with several SSPs in different phases of call processing, from validation, through call set-up to call termination. The SCP 603 queries the Service Data Point (SDP) which holds the database containing all customer-related information needed by service applications and identifies the geographical number to which the call is to be routed. The notification service 604 emulates as a Short Message Service Center (SMSC) and creates a Short Message Service (SMS) and tries to send to the called party 601. The called party network 602 comprises of a Home Location Register (HLR) 608 and Mobile Switching Center (GMSC) 609. The HLR 608 is a central database that contains details of each cellular device subscriber who is authorized to use the GSM core network. The HLR 608 incorporates the Message Waiting Data (MWD) list and the data units Mobile Not Reachable Flag (MNRF) and Mobile Not Reachable Reason (MNRR). The Mobile-Station-Not-Reachable-Flag (MNRF) within the HLR and the VLR is a Boolean parameter with the value TRUE when the list MWD contains one or more list elements because an attempt to deliver a short message to an MS has failed with a cause of Absent Subscriber, and with the value FALSE otherwise. The Mobile-Station-Not-Reachable-Reason (MNRR) within the HLR stores the reason for the MS being absent when an attempt to deliver a short message to an MS fails at the MSC with the cause Absent Subscriber. The HLR updates the MNRR with the reason for absence and the MNRF is set. The HLR clears the MNRR when the MNRF is cleared. The MNRR shall contain one of the following reasons as 'No Paging Response' and 'IMSI Detached'. When a mobile terminated short message delivery fails due to the MS being temporarily absent (i.e. either IMSI DETACH flag is set or there is no response from the MS to a paging request via the MSC), the SC address is inserted into the MWD list (if it is not already present), the MNRF is set (if it is not already set) and the MNRR via the MSC is updated. When either the HLR or VLR detects that the MS (with a non-empty MWD and the MNRF set in the HLR) has recovered operation (e.g. has responded to a paging request), the HLR directly or on request of the VLR will invoke operations to alert the SCs within the MWD. Once the Alert SC operations have been invoked, the MNRF and MNRR via the MSC are cleared. After each SC is alerted by the HLR, the address for that SC is deleted from the MWD. HLR 608 directly receives and processes Mobile Application Part (MAP) transactions and messages from elements in the GSM network, for example, the Location Update messages received as mobile phones roam around. GMSC 609 is a primary service delivery node for GSM, responsible for handling voice calls and SMS as well as other services (such as conference calls, FAX and circuit switched data). The GMSC 609 sets up and releases the end-to-end connection, handles mobility and hand-over requirements during the call and takes care of charging and real time pre-paid account monitoring. The GMSC 609 checks the status of called party 601 by checking the database if International Mobile Subscriber Identity (IMSI) of called party 106 is attached and/or performs a paging for the cellular communication device of called party 106. If the called party 601 is not available, then GMSC 609 sends a failure response to the notification service 604 in network 602. When the called party 601 cellular communication device is switched on and/or answers a paging response and gets registered to the network 602, the GMSC 609 sends an alert message (instanced as Alert-SC) to notification service 604 indicating the availability of the called party 601. On receiving the called party 601 alert message, the service 604 sends a notification in the form of an SMS or by any other means possible to send the notification to the calling party 606 as initially requested by called party 601.

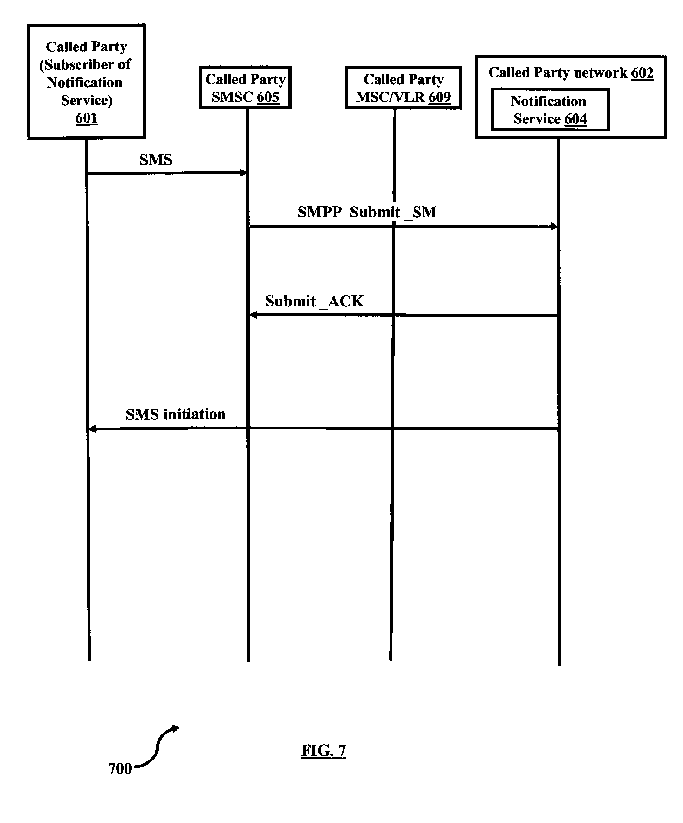

FIG. 7 illustrates a schematic diagram depicting the call flow for subscription of notification service by a called party using an SMS in a telecommunication network according to an embodiment herein. The called party (subscriber of notification service) 601 may be switched-off or out of network coverage area when the initially calling party 606 try to call the called party 601. The notification service 604 provides feature to send notification to calling party 606 when the initially unavailable called party 601 becomes available. To subscribe to the notification service 604, the called party 601 creates an SMS and sends the SMS to an operator specified number as a request for the subscription of the notification service 604. The SMS reaches SMSC 605 and the SMSC 605 sends a SMPP Submit SM to the notification service 604, where the notification service 604 is hosted in the called party's network 602. The notification service 604 acknowledges the SMS request from subscriber 601 by sending a Submit-ACK to subscriber's 601 SMSC 605. On receiving the SMS from subscriber 601, the notification service 604 inserts the record of subscriber 601 in network 602 database. Further, the service 604 sends SMS intimation to subscriber 601 indicating that the subscriber 601 has successfully subscribed for the notification service 604.

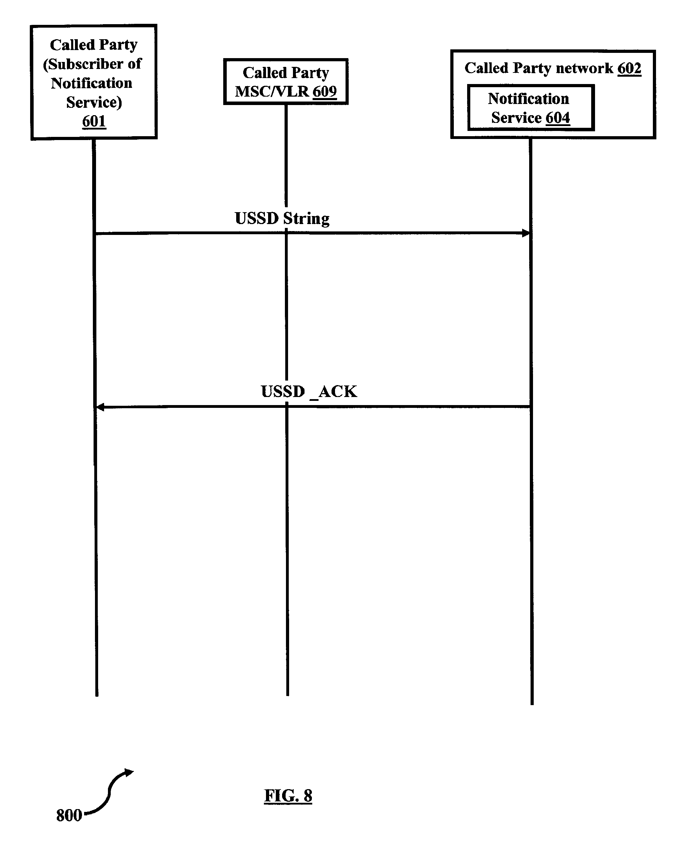

FIG. 8 illustrates a schematic diagram depicting the call flow for subscription of notification service by a called party using an SMS in a telecommunication network according to an embodiment herein. The notification service 604 provides feature to send notification to calling party when the initially unavailable called party (subscriber of notification service) 601 becomes available. The subscriber 601 creates a USSD string, for instance: *<Service code digits># and sends to an operator specified number as a request for the subscription of the notification service 604. The message opens a USSD session with the notification service 604 hosted at subscriber's network 602. The notification service 604 then inserts the record of subscriber 601 in network database and sends back a message USSD-ACK to subscriber 601 indicating that subscriber 601 has successfully subscribed for the service 604. Further, the notification service 604 closes the USSD session.

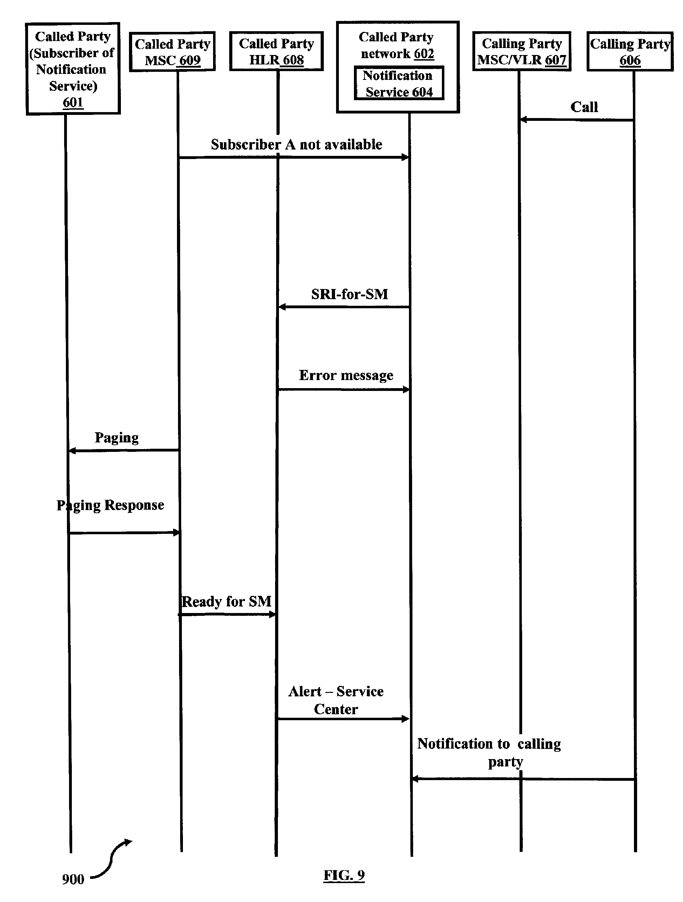

FIG. 9 illustrates a schematic diagram depicting the call flow for notifying the availability of an initially non-available called party to a calling party by a notification in a telecommunication network according to an embodiment herein. The party 601 can request the network 602 to send notification request indicating the availability to all the calling parties who tried calling the party 601 during its unavailability period. The calling party 606 tries to set up a call with party 601. The party 601 may be switched-off or out of network coverage. When the calling party's 606 call reaches the network 602 of party 601, the GMSC 602 of called party 601 informs the unavailability of called party 601 to the called party network 602. The notification service 604 hosted in network 602 of called party 601 stores the calling party 606 number in the notification list created for called party 601. The calling party 606 call is released and the notification service 604 sends a message to calling party 606 informing that the availability of the called party 601 may be notified to the calling party 606 as party 601 switches on the communication device or becomes network reachable. The notification service 604 then sends a SRI-for-SM message to Home Location register (HLR) 608 of called party 601. If MNRF for the called party 601 is set at HLR 608, the HLR 608 sends back an absentSubscriber_SM message to notification service 604 with an error value denoting that the called party 601 is switched-off or not under network coverage. The HLR 608 of called party 601 then registers GT or MSISDN of notification service 104 in the Messages-Waiting-Data (MWD) list. If MNRF is not updated and/or SMS is sent with the high priority, the HLR 608 sends back the SRI-for-SM-Ack. It then receives the MT-FSM message from Notification service 604. Called party network 602 checks if the called party 601 is reachable, if the called party 601 is not reachable, the HLR 608 of called party 601 then registers GT or MSISDN of notification service 104 in the Messages-Waiting-Data (MWD) list and also sets the Data-units Mobile-Station-Not-Reachable-Flag (MNRF) and Mobile-Station-Not-Reachable-Reason (MNRR) and sends the failure report to notification service 604. When the called party 601 device gets switched on or becomes network reachable and answers a paging response and gets registered to the network 604, a Ready-for-ShortMessage message is sent from GMSC 609 to HLR 608 of called party 601. HLR 608 then resets the data unit MNRF and MNRR that were set for called party 601 and sends an Alert-SC to notification service 604 that was added in message waiting data (MWD) list of party 601 at HLR 608. The notification service 604 address (GT or MSISDN) is then removed from MWD list at HLR 608 of called party 601. On receiving the Alert-SC message, the notification service 604 sends a notification to the calling party 606 as subscribed by party 601. The notification can be send via an SMS or USSD string. The notification service 604 informs the calling party 606 that the called party's 601 device is switched on and is in network reachable range. The notification service 604 then removes the record of calling party 606 from the notification list of party 601.

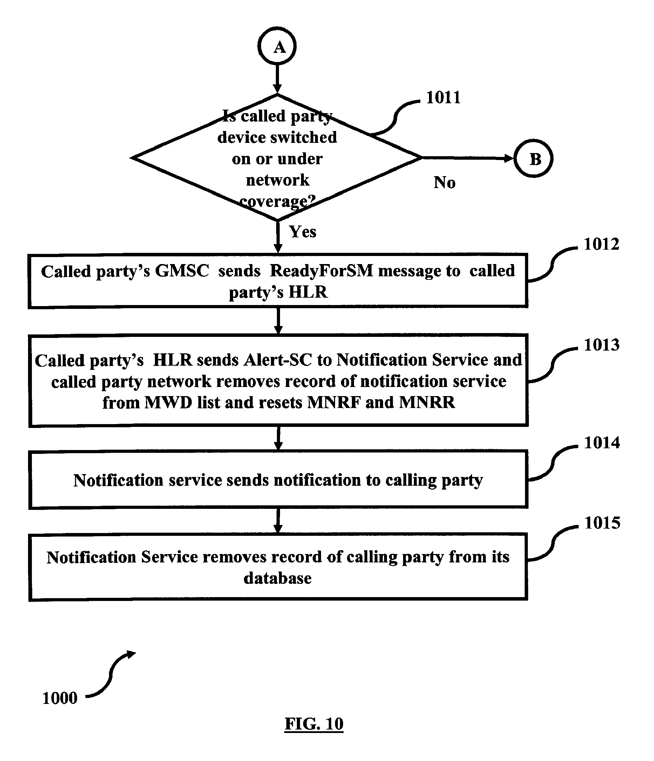

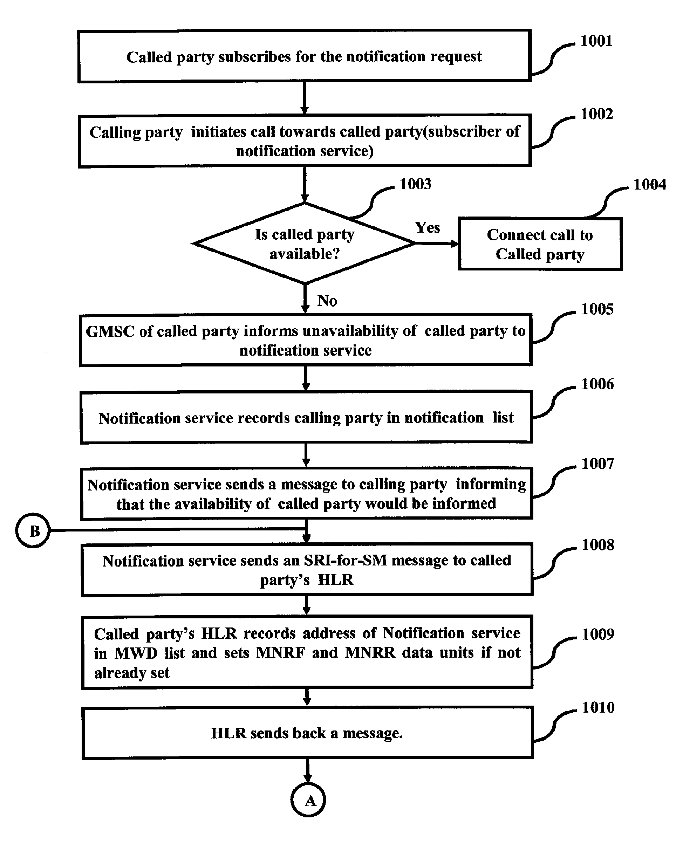

FIG. 10 illustrates a flowchart depicting a method of notifying the availability of an initially non-available called subscriber to a calling party in a telecommunication network according to an embodiment herein. The notification service 604 provides feature to send notification to calling subscriber when the initially unavailable called party (subscriber to notification service) 601 becomes available. The party 601 subscribes (1001) for the notification request by creating a USSD string, for instance: *<Service code digits># or an SMS as a request for the subscription of the notification service 604 and sending to an operator specified number. The calling party 606 initiates (1002) a call with party 601 and the called party network 602 checks (1003) whether 601 party is available. If party 601 is available, then the network 602 connects (1004) calling party's 606 call to called party 601. If called party 601 is not available, the GMSC 609 of party 601 informs (1005) unavailability of called party 601 to the notification service 604. The notification service 604 hosted in network 602 of called party 601 records (1006) the calling party 606 information in the notification list created for called party 601. The calling party 606 call is then released and the notification service 604 sends (1007) a message to calling party 606 informing that the availability of the called party 601 will be notified to the calling party 606 as called party 601 switches on the communication device or becomes network reachable. The notification service 604 then sends (1008) a SRI-for-SM message to Home Location register (HLR) 608 of called party 601. If the Mobile-Station-Not-Reachable-Flag (MNRF) for the called party 601 is set at HLR 608, the called party's 601 HLR 608 records (1009) the address (GT or MSISDN) of notification service 604 in the Messages-Waiting-Data (MWD) list. The HLR 803 sends (1010) back an error absentSubscriber_SM message back to notification service 604 with an error value denoting that the called party 601 is switched-off or not under network coverage. If MNRF is not set or SMS is sent with high priority, the HLR 608 sends back the SRI-forSM-ACK, the notification service 604 then sends MT-FSM MAP message to GMSC 609. GMSC 609 checks the status of called party 601 and responds with a failure report to Notification service 604 if the called party 601 is either switched off or not under the network coverage. The called party's 601 HLR 608 records (1009) the address (GT or MSISDN) of notification service 604 in the Messages-Waiting-Data (MWD) list and sets the data units Mobile-Station-Not-Reachable-Flag (MNRF) and Mobile-Station-Not-Reachable-Reason (MNRR) for called party 601. The called party's network 602 keeps on checking (1011) if called party 601 is switched on or has come under network coverage. If the cellular communication device of called party 601 switches on or gets registered with the network 602 or if the paging is answered by the called party 601 device, then GMSC 609 sends (1012) a ReadyForSM MAP message to called party's 601 Home Location Register (HLR) 608. HLR 608 then resets (1013) the data unit MNRF and MNRR that were set for called party 601 and sends a Alert-SC to notification service 604 that was added in message waiting data (MWD) list of party 601 at HLR 608. The notification service 604 address (GT or MSISDN) is then removed from MWD list at HLR 608 of called party 601. On receiving the Alert-SC message, the notification service 604 sends (1014) a notification to the calling party 606. The notification can be send via an SMS or USSD string. The notification informs the calling party 606 that the called party's 601 device is switched on and is in network reachable range. The notification service 604 then removes (1015) the record of calling party 606 from the notification list of subscriber 601. The various actions in method 1000 may be performed in the order presented, in a different order or simultaneously. Further, in some embodiments, some actions listed in FIG. 10 may be omitted.

The embodiment disclosed herein provides a method for notifying a calling party when the intially unavailable called party becomes available for GSM networks. The HLR notifies the calling party network about availability of called party and hence no additional signaling is required to continuously poll the HLR. Further, time out does not occur as there is no polling done by the notification service and the calling party is always notified when called party becomes available irrespective of the time for which called party becomes unavailable.

The embodiment disclosed herein saves the time and efforts of calling party as calling party need not try calling the called party repeatedly. Further, the embodiment can turn out as a source of income for the service provider by charging the calling party for the request of notification and/or charging the called party for subscribing to the notification service.

The embodiment disclosed herein provides a method for a party to subscribe for a service to notify its availability to all the calling parties who tried calling the subscriber during non-availability period. HLR tracks the subscriber and notify the network about the availability of subscriber. HLR notifies the availability of subscriber to the network and hence no extra signaling is required to continuously poll the HLR or the called party. The service is installed only at the subscriber's network, and any calling party who tried calling the subscriber would receive notification of the availability of the called subscriber irrespective of the location or operator of calling party.

The embodiments disclosed herein can be implemented through at least one software program running on at least one hardware device and performing network management functions to control the network elements. The network elements shown in Fig. 1 and Fig. 6 include blocks which can be at least one of a hardware device, a software module or a combination of hardware device and software module.

The embodiment disclosed herein specifies that the notification service 104 can preferably be hosted in Intelligent Network (IN) or Service Control Point (SCP), however it is not a limitation. The notification service can be hosted as a separate entity or in combination with the already existing elements of the network. Therefore, it is understood that the scope of the protection is extended to such a program and in addition to a computer readable means having a message therein, such computer readable storage means contain program code means for implementation of one or more steps of the method, when the program runs on the SCP or any suitable programmable device. The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. The hardware device can be any kind of device which can be programmed including e.g. any kind of computer like a server or a personal computer, an FPGA, a processor, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

## Claims

1. A method of notifying availability of a called party (106) to a calling party (101) said method comprising steps of:
a) said calling party (101) sending (301) a notification request to a calling party network (102);
b) a notification service (104) sending (303) a message to called party network (107), wherein said notification service (104) is hosted in said calling party network (102);
c) said called party network (107) checking availability of said called party (106);
d) a Message Service Center (MSC) (108) of said called party sending (306) a failure report to said notification service (104) if said called party is not available;
e) Said called party network (105) sending (308) an alert to calling party network (102) indicating availability of said called party (105); and
f) said notification service (104) sending (310) a notification message to said calling party (101) informing availability of said called party (106), on receipt of said alert.

2. The method as claimed in claim 1, wherein said notification request can be made using one of
Unstructured Supplementary Service Data (USSD) string.
Interactive Voice Response (IVR) menu; or
Short Message Service (SMS).

3. The method as claimed in claim 1 or 2, wherein step (c) is performed by one of
Message Switching Center (MSC) (109);
Visitor Location Register (VLR) (109); or
Home Location Register (HLR) (108).

4. The method as claimed in claims 1 to 3, wherein Home Location Register (HLR) (108) of said called party network (105) sends alert to calling party network (102) indicating availability of said called party (105).

5. The method as claimed in claims 1 to 4, wherein said called party (106) registers for said notification service by sending a subscription request (901).

6. The method as claimed in claims 1 to 5, wherein said failure report comprises of a data-unit including Mobile-Station-Not-Reachable-Flag (MNRF) and Mobile-Station-Not-Reachable-Reason (MNRR) fields.

7. A telecommunication network comprising
means for sending (302) an acknowledgment for notification request to a calling party (101), wherein said notification request is sent by said calling party (101);
means for sending a message including routing information to called party network (107);
means for receiving a called party (106) availability failure report from network of said called party (106), on said called party network (107) identifying unavailability of said called party (106); and
means for receiving an alert indicating availability of said called party (106) from network of said called party (106) and notify availability of said called party (106) to said calling party (101), on said called party (106) becoming available.

8. The network as claimed in claim 7, further comprising means adapted for adding a notification service (104) to called party network (107), wherein said notification service (104) is hosted in said calling party network (102).

9. The network as claimed in claims 7 to 8, wherein said calling party network (102) stores record of said calling party (101) on receiving (301) a request for notification of availability of said called party (106).

10. The network as claimed in claims 7 to 9, wherein said calling party network (102) removes (311) record of said calling party (101) and said called party (106) from notification list on sending said called party (106) availability notification to said calling party (101).

11. The network as claimed in claims 7 to 10, wherein said network comprising means for setting Mobile-Station-Not-Reachable-Flag (MNRF) and Mobile-Station-Not-Reachable-Reason (MNRR) on sending said failure report to said calling party (101) indicating non availability of said called party (106).

12. The network as claimed in claims 7 to 11, wherein said network comprising means for resetting Mobile-Station-Not-Reachable-Flag (MNRF) and Mobile-Station-Not-Reachable-Reason (MNRR) on sending said called party (106) availability notification to said calling party (101).

13. A telecommunication network comprising of
subscribing means for enabling a called party (601) to subscribe for a notification service (104);
notification means for informing unavailability of said called party (601) to a calling party (606), on said calling party (606) attempting to call said called party (601) if said called party (601) is not available and said called party (601) has subscribed for said notification service with said subscribing means; and
alert means for sending an alert indicating availability of said called party (601) to said calling party network (604); on said called party (601) becoming available, if said called party (601) has subscribed for said notification service with said subscribing means.

14. The network as claimed in claim 13, wherein said network comprising means adapted to remove (915) record of said calling party (606) from a notification list on sending said called party (601) availability notification to said calling party (606).
